# EUROPÄISCHE PATENTANMELDUNG

(11) **EP 1 376 160 A2**
(43) Veröffentlichungstag der Anmeldung: **02.01.2004**
(21) Anmeldenummer: 03013816.8
(22) Anmeldetag: 18.06.2003
(51) Int. Cl.: G02B 5/12

(54) **Teiltransmissionsreflektor und optisches Sicherheitssensorsystem**

(30) Priorität: 22.06.2002 DE 10228013
(71) Anmelder: Gubela, Hans-Erich, Sen., 77887 Sasbachwalden (DE)
(72) Erfinder: Gubela, Hans-Erich sen., 77887 Sasbachwalden (DE); Gubela, Hans-Erich jun., 77887 Sasbachwalden (DE)
(74) Vertreter: WOLF & LUTZ

(57) **Zusammenfassung**

Die Erfindung betrifft einen Teiltransmissionsreflektor mit einer reflektierenden Struktur und mit einem an der Lichteintrittsseite angeordneten, die reflektierende Struktur bedeckenden teiltransparenten Material, das wellenlängenselektiv Licht in einem unsichtbaren Wellenlängenbereich transmittiert. Erfindungsgemäß ist vorgesehen, dass die reflektierende Struktur die Kontur eines eine Information wiedergebenden Symbols (61) aufweist.

## Beschreibung

Die Erfindung betrifft einen Teiltransmissionsreflektor, das ist ein Reflektor oder eine Reflexfolie, deren Lichttransmission nur in einem Teil des Wellenlängenbereiches des Lichts gegeben ist, jedoch im Wesentlichen nicht im Wellenlängenbereich des sichtbaren Lichts. Der Teiltransmissionsreflektor ermöglicht neue Sicherheitssensorsysteme.

Desweiteren betrifft die Erfindung ein optisches Sicherheitssensorsystem, das unter Verwendung des Teiltransmissionsreflektors die Reflexionen von diesem gegenüber Reflexionen anderer Quellen zu unterscheiden vermag, indem das Sicherheitssensorsystem Licht zweier Wellenlängen aussendet und die Reflexion des Teiltransmissionsreflektors detektiert.

Auch betrifft die Erfindung einen Teiltransmissionsreflektor als geheimen Informationsträger. Es zeigt die Erfindung neue Möglichkeiten auf, einen für das menschliche Auge nicht reflektierend wirkenden Reflektor, also einen quasi unsichtbaren Reflektor oder unsichtbare Reflexionsfolie zu schaffen, der oder die nur mittels optischer Sensorik zu beobachten ist. So können für den Aussenstehenden geheime Informationen von dem Teiltransmissionsreflektor abgefragt werden, ohne dass diese für den nicht eingeweihten Aussenstehenden sichtbar sind.

Weiterhin gibt die Erfindung eine zuverlässige Methode zur Entfernungsmessung für die optische Sensorik.

Es sind viele Stoffe, z.B. Gläser und Kunststoffe sowie auch zahlreiche organische, mineralische oder metallische Farbstoffe, bekannt, die bestimmte Wellenlängenbereiche des Lichts absorbieren oder sich zu diesen transparent zeigen. Für die vorliegende Erfindung sind besonders solche Stoffe von Interesse, die nicht transparent für sichtbares Licht sind, jedoch außerhalb des sichtbaren Spektrums zu einem wesentlichen Prozentsatz Transparenz zeigen.

Für die Verwendung der Erfindung in der optischen Sensorik sind hierbei vor allem Wellenlängen des Licht heranzuziehen, in denen die am Markt erhältlichen Dioden für die Aussendung des Lichts arbeiten und die Fotodedektoren, Fototransistoren oder Kamerasysteme erhältlich sind.

So gibt es Fotodedektoren, die etwa den Lichtwellenbereich der Augenempfindlichkeit abdecken, z.B. Siemens Fotodiode BPW21 und solche Fotodedektoren, die eng begrenzt Wellenlängenbereiche detektieren oder den Bereich oberhalb des Bereiches des sichtbaren Lichts abdecken, z.B. Fotodiode Siemens SFH 205 für etwa 800 bis 1100 nm. Dazu kann man nun Lichtemitter wählen, wie zum Beispiel Siemens SFH 483, deren Strahlung etwa 880 nm entspricht.

Der Erfindungsgedanke beruht nun darauf, bekannte Reflektoren, die aus einer Vielzahl von Tripeln bestehen, oder Linearreflektoren, die aus einer Vielzahl von Linearen mit einem Öffnungswinkel nahe 90° bestehen, so herzustellen, dass sie das sichtbare Licht nicht reflektieren können. Weil das zunächst absurd oder völlig sinnlos erscheint, hat man bisher solche "blinden Rückstrahler" nicht gefertigt. Man hat die mögliche Vorteilhaftigkeit solcher Elemente nicht erkannt. Wenn nämlich für die Fertigung dieser Tripelreflektoren oder Linearreflektoren ein Werkstoff oder ein Zuschlagstoff verwendet wird, der zwar im sichtbaren Bereich nicht transparent ist, jedoch außerhalb dieses Bereiches eine wesentliche Transparenz zeigt, so erhält man sehr wohl einen funktionstüchtigen "Rückstrahler", dessen Fähigkeit aber nur auf ein eingeschränktes Spektrum des Lichts beschränkt ist. Diese bewusst herbeigeführte Blindheit für sichtbares Licht und Teiltransparenz für andere Wellenlängen des Lichtspektrums macht sich nun die vorliegende Erfindung zu nutze, um einige grundlegende Probleme der optischen Sensorik zu lösen.

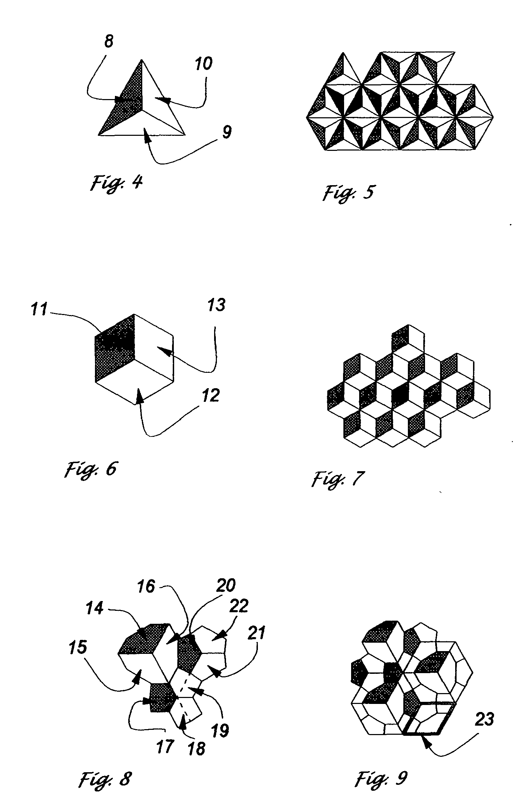

Im Arbeitsbereich der Reflexlichtschranken bestehen große Erkennungsprobleme. Reflexlichtschranken sind optische Sensoren, die einen Lichtstrahl zu einem Reflektor aussenden und anschließend den reflektierten Lichtstrahl wieder empfangen. Dabei kann nun die durch einen Gegenstand verursachte Unterbrechung dieser Reflexion detektiert werden. Bei Laserlichtschranken kann in Verbindung mit mikrokubischen Tripelreflektoren, zum Beispiel in Fig. 6, sogar die Verformung des reflektierten Lichtstrahles bewertet werden, so dass die Störung des reflektierten Lichtstrahles verursacht von einem transparenten Glaskörper oder einem transparentem Kunststoffkörper unterschieden werden kann. In der Fördertechnik werden viele tausend Reflektoren verwendet zur Steuerung des Materialflusses mittels Lichtschranken. Bei der Vielzahl der Messsysteme kommt es häufig zu Störungen durch Fremdlicht oder dem Licht anderer Lichtschranken. Je näher die Lichtschranken zueinander stehen, um so größer wird diese Störanfälligkeit. Man versucht die Störungen durch Polfiltersysteme und das Senden von wiedererkennbaren Lichtimpulse zu begrenzen. Doch wird die Situation heute dadurch noch zusätzlich erschwert, dass viele Arbeitsschutzkleidungen zur Sicherung ihrer Benutzer mit Tripelreflektorenfolien ausgerüstet sind. Diese Reflexfolien retroflektieren aber auch das Licht der Lichtschranke, durch die Tripel wird das polarisierte Licht der Lichtschranke gedreht, so dass das Polarisationsfiltersystem der Lichtschranke überlistet wird. Die Lichtschranke meldet, der Weg bis zum Sensorreflektor sei frei, tatsächlich aber hält sich ein Mensch mit Reflexflächen auf seiner Kleidung im Sensorbereich auf. Das führt zwangsläufig zu schweren Unfällen oder Steuerungsfehlern der Maschinen und Anlagen.

Die Lichtschranke, also der optische Sensor, muss fähig werden, zwischen dem von seinem zugeordneten Reflektor ankommendes Licht und dem reflektierten Licht anderer Quellen zu unterscheiden. Diese Aufgabe erfüllt der erfindungsgemäße Teiltransmissionsreflektor im optischen Sicherheitssensorsystem. Das soll an einem Beispiel deutlich werden, das im Auftrag des Erfinders gefertigt wurde.

Eine herkömmliche Kunststoffspritzgußform für die Herstellung eines Sensorikreflektors, bestehend aus einer Fläche mit vielen Fullcube-Tripeln, konnte verwendet werden. Auf die Anpassung der Winkelung der Tripel des Werkzeuges an den verwendeten Werkstoff wurde verzichtet.

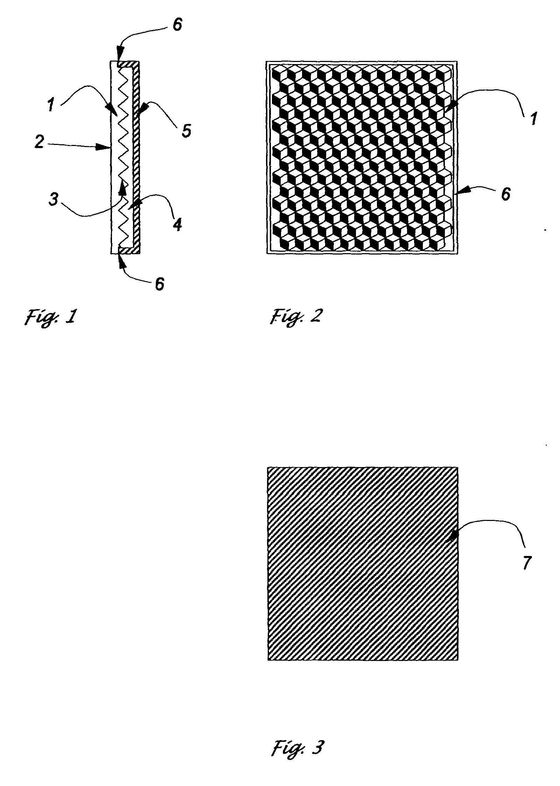

Der Reflektor (Fig. 1) ist aus Kunststoff gefertigt und besteht aus zwei Teilen. Zunächst einer die Tripel tragenden Tripelplatte 1 mit der Lichteintrittsseite 2 und den kubischen Tripeln 3.

Die Tripel entsprechen in Ihrer Form den Tripeln der Fig. 6 und Fig. 7. Ebenso können aber auch Tripel verwendet werden, wie die Pyramiden der Fig. 4 und Fig. 5 oder Tripel der Fig. 8 bis Fig. 15. Die Tripel 3 können Licht reflektieren aufgrund der Totalreflexion zwischen den Grenzschichten der Tripel 3 und der dahinter liegenden Luft 4. Um die Grenzbedingungen nicht durch Staub oder Wasser zu verändern, werden die Tripel durch eine Rückwand 5 geschützt. Dieser Schutz kann aber auch durch metallische Verspiegelung erfolgen, allerdings verändert das die Reflexionseigenschaften. Es liegt dann keine Totalreflexion mehr vor, sondern eine Reflexion an metallischen Spiegeln.

Die Rückwand 5 wird mit der Tripelplatte 1 durch Verschweißen mit Ultraschall an der Schweißnaht 6 luft- und wasserdicht verbunden. Die Fig. 2 zeigt den kubischen Tripelreflektor im Prinzip von Vorne mit der Tripelplatte 1 und der Schweißnaht 6.

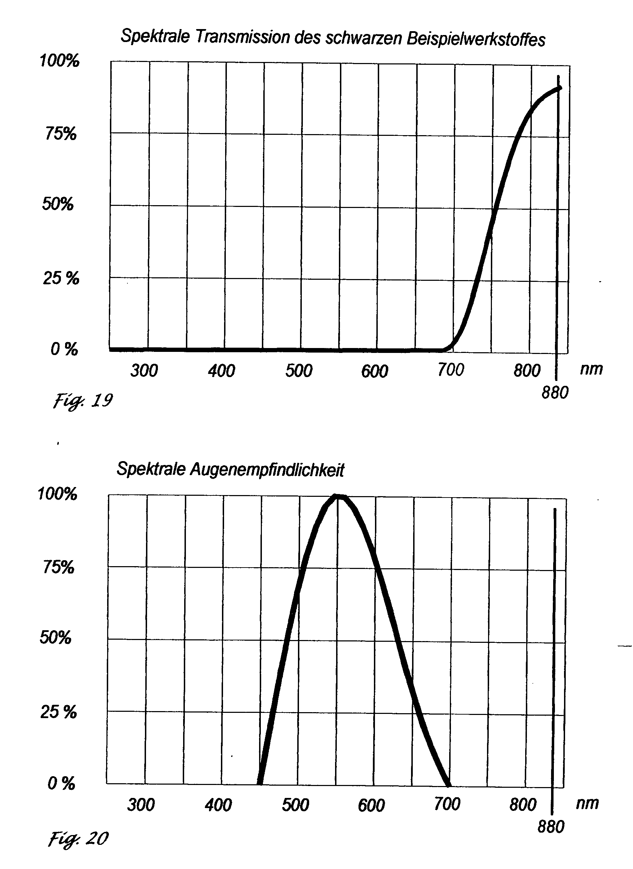

Für die Abformung der Reflektorplatte 1 wird in diesem Beispiel ein schwarz eingefärbter Kunststoff gewählt. Als geeignet zeigt sich PMMA von Degussa, im Vertrieb der Röhm GmbH Co. KG, Darmstadt, mit der Materialbezeichnung Plexiglas 7N schwarz 90053. Der Werkstoff ist für sichtbares Licht nicht transparent. Der Reflektor (Fig. 3) erscheint folglich als völlig schwarze Platte 7 und ist als Reflektor nicht erkennbar. Aber dieser Werkstoff ist zunehmend transparent, beginnend bei einer Wellenlänge von 700 nm und größer, wie in Fig. 19 als Kurve der spektralen Transmission des schwarzen Beispielwerkstoffes gezeigt. Ebenso kommen violett oder dunkelbraun eingefärbte Kunststoffe in Betracht.

Zum Vergleich zeigt die Fig. 20 die spektrale Augenempfindlichkeit. So ist erkennbar, dass ein aus diesem Werkstoff gespritzter Tripelreflektor zwar für den menschlichen Betrachter blind wirkt oder überhaupt nicht als Reflektor erkannt wird. Der Reflektor ist jedoch für einen optischen Sensor, der oberhalb 700 nm detektieren kann, sehr wohl ein funktionstüchtiger Reflektor.

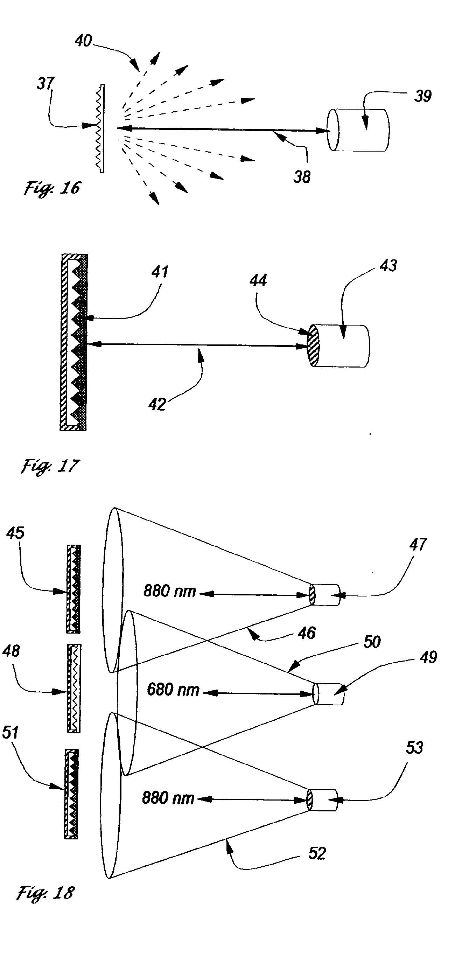

Für die Detektion wurden zwei optische Lichtschrankensensoren von der Firma Bernstein, Bueckeburg, zur Verfügung gestellt. Sensor A für 880 nm, Artikel Nr. 655 481 9003, und Sensor B für ca. 680 nm, Artikel Nr. 655 581 9003. Unter dem Begriff "Sensor" wird im folgenden eine Vorrichtung verstanden, die eine Lichtquelle und einen Lichtdetektor umfasst. Diese können als eine Baueinheit zusammengefasst oder getrennt angeordnet sein. Fig. 17 zeigt die Anwendung des Sensors A 43 mit dem beispielhaften schwarzen Teiltransmissionsreflektor 41 bei 880 nm. Das Lichtsignal 42 wird vom Sensor 43 ausgesandt. Die Lichtaustrittsöffnung und zugleich Lichteintrittsöffnung 44 am Sensor A ist mit einer teiltransparenten, braun eingefärbten Kunststoffplatte aus Polyamid 12 verschlossen und ist für sichtbares Licht unpassierbar. Der Teiltransmissionsreflektor retroflektiert das ausgesandte Infrarotlicht zum Sensor A 43 zurück, so dass der Sensor den Teiltransmissionsreflektor 41 beobachten und bei Unterbrechung des Lichtweges schalten kann. Hingegen bei Verwendung des Sensors B mit 680 nm Wellenlänge und dem beispielhaften Teiltransmissionsreflektor erfolgt keine Retroflexion.

Beide Sensoren A und B arbeiten aber bei Verwendung mit einem glasklaren herkömmlichen Sensorreflektor, der beide Wellenlängen reflektiert. Ordnet man nun beide Sensoren dicht nebeneinander, um ihnen unterschiedliche Überwachungsaufgaben zu geben, so kann man herkömmliche glasklare Sensorreflektoren nebeneinander nicht verwenden. Denn der Sensor B könnte durch Reflexionen des benachbarten, nicht zu seiner Beobachtungsstrecke gehörenden, glasklaren Reflektors gestört werden. Nur wenn der benachbarte Reflektor ein erfindungsgemäßer Teiltransmissionsreflektor ist, würde das Licht mit 680 nm von diesem nicht reflektiert.

Fig. 18 zeigt die beispielhafte Anordnung dreier Sensoren 47, 49, 53, denen wechselweise Teiltransmissionsreflektoren 45, 51 und ein glasklarer Reflektor 48 zugeordnet sind. Bei dieser Anordnung sind die Lichtschranken bereits sehr störungssicher. Jedoch kann durch die Überdeckung der Beleuchtungskeulen es doch zu Fehlschaltungen kommen. Wenn der Lichtweg zwischen dem Teiltransmissionsreflektor 45 und dem Sensor 47 durch einen Gegenstand unterbrochen ist, so könnte doch reflektiertes Licht vom Reflektor 48 den Sensor 47 täuschen und zur Fehlinterpretation führen, der Weg zwischen Reflektor 45 und Sensor 47 sei frei. Abhilfe schaffen kann in dieser Situation nur, dass der Reflektor 48 ebenfalls als Teiltransmissionsreflektor ausgebildet wird, jedoch mit der Reflexionsfähigkeit zum Beispiel nur im Bereich kleiner 700 nm, so dass das Licht vom Sensor 47 mit 880 nm nicht reflektiert werden kann.

Dieses Beispiel zeigt, dass für die optische Sensorik dringend erfindungsgemäße Teiltransmissionsreflektoren benötigt werden mit verschiedenen Fenstern des Spektrums. Der beispielhafte Teiltransmissionsreflektor mit einem Fenster oberhalb 700 nm ist also nur ein Beispiel einer notwendigen Baureihe verschiedener Teiltransmissionsreflektoren.

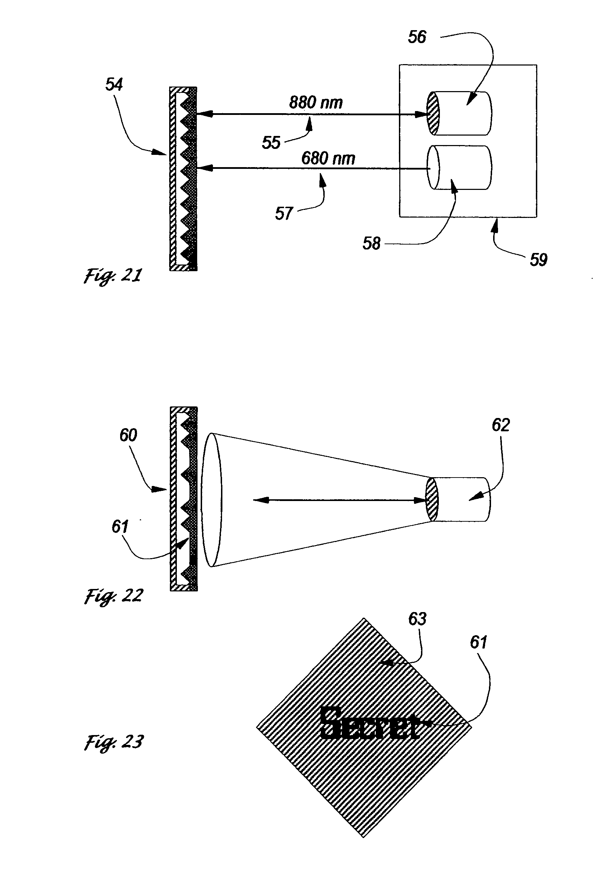

In der Verbindung mit dem beispielhaften Teiltransmissionsreflektor mit der spektralen Transmissionsfähigkeit der Fig. 19 gibt es aber die Möglichkeit, ein optisches Sicherheitssensorsystem zu schaffen, wie in Fig. 21 gezeigt. Der Teiltransmissionsreflektor 54 wird nacheinander oder zeitgleich mit 880 nm und 680 nm beleuchtet. Lichtquellen und Lichtdetektoren sind in den Sensoren 56 (880 nm) und 58 (680 nm) enthalten. Nur wenn bei 880 nm ein Reflexsignal empfangen wird, jedoch nicht bei 680 nm ist der Weg zwischen dem Sensorsystem 59 und dem Teiltransmissionsreflektor 54 frei. Detailliert ist die Schaltungslogik in der seperaten Beschreibung der Fig. 21 erläutert. Dieses vorgeschlagene Sicherheitssensorsystem kann auch durch das Einführen einer fremden Reflexionsfolie, wie auf Arbeitsschutzkleidung, in den Strahlengang des Sensors nicht zu Fehlschaltungen führen. Denn solche fremde Reflexionsfolie würde Reflexsignal bei 880 nm und 680 nm geben, so dass das Sicherheitssensorsystem den Fehler erkennt.

Nachdem nun dargestellt wurde, dass die erfindungsgemäßen Teiltransmissionsreflektoren für verschiedene Fenster des Lichtspektrums störungsfreie optische Sicherheitssensorsysteme ermöglicht, soll nun dargestellt werden, das Teiltransmissionsreflektoren viele neue Beobachtungsmöglichkeiten und Informationübertragungen in der photonischen Kommunikation ermöglichen.

Ein neues Beispiel zeigen die Fig. 22 und Fig. 23. Wenn der Teiltransmissionsreflektor für sichtbares Licht undurchdringlich ist, so kann man der zum Beispiel schwarz erscheinenden Scheibe oder Folie nicht ansehen, dass diese Scheibe oder Folie in einem bestimmten Bereich des Spektrums auf ein Lichtsignal mit Reflexion antworten kann. Damit ist der erfindungsgemäße Teiltransmissionsreflektor Träger einer geheimen Information. Man kann nun diese geheime Information auch variieren. Fig. 22 zeigt einen Teiltransmissionsreflektor 60 mit einer deformierten Tripelstruktur 61. Diese Deformation oder Lückenhaftigkeit als Kodierung kann direkt im Herstellungsprozess durch Gestaltung der Tripelstruktur in der Fertigungsform oder bei einer Tripelfolie auch nachträglich durch einfaches Einprägen erfolgen. Auch kann die Reflexionseigenschaft der Tripelstruktur 61 durch Lackieren an bestimmten Stellen oder Abdeckung dieser Stellen in ihrer Totalreflexion unwirksam gemacht werden. Von außen ist dem Teiltransmissionsreflektor nicht anzusehen, dass er eine zum Beispiel im Tripelfeld eingeprägte Information enthält. Mit dem optischen Sensor 62, der eine Lichtquelle und ein geeignetes Empfangssystem enthält, zum Beispiel eine Kamera für den geeigneten Lichtwellenbereich des Teiltransmissionsreflektor, kann die im Teiltransmissionsreflektor enthaltene Information sichtbar gemacht werden.

Die Fig. 23 zeigt einen solchen Teiltransmissionsreflektor von vorne, in dem der optische Sensor die Information "Secret" 61 erkennt. Diese Schrift kann zur Gesamtfläche, das heißt dem Hintergrund 63 des Teiltransmissionsreflektors positiv oder negativ gestaltet sein, also reflektierend oder ein nicht reflektierendes Symbol 61 auf einer reflektierenden Fläche 63.

So kann die dunkle Arbeitskleidung von Polizisten im Gefahreinsatz mit einer Folie als Teiltransmissionsreflektor, dunkel oder schwarz gefärbt, ausgerüstet werden. Die in der Folie verborgene Information ist für das Auge nicht sichtbar. Jedoch kann zum Beispiel der Einsatzleiter seine so ausgerüsteten Mitarbeiter erkennen unter Verwendung geeigneter Sensorik.

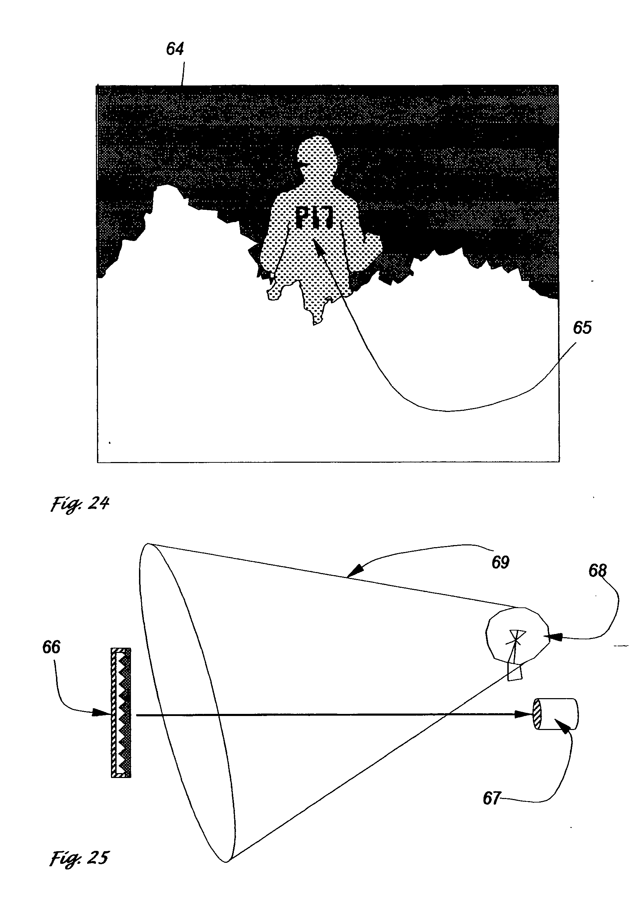

Fig. 24 zeigt einen Polizisten 64 hinter Büschen verborgen, dessen Kennung "P17" 65 sichtbar wird, wenn der Mitarbeiter mit der zum Teiltransmissionsreflektor passenden unsichtbaren Lichtwellenlänge bestrahlt wird. Versuche mit einer Infrarotlicht-Brille die beleuchtet und zugleich über Kameras und Bildschirme dem Beobachter ein Bild liefert, zeigte hervorragende Ergebnisse. Der Teiltransmissionsreflektor, der bei Tageslicht vom Auge nicht erkannt wird, leuchtet, im dunklen Raum mit der Infrarot-Brille gesucht, sehr hell auf.

Fig. 25 zeigt dazu die Anordnung der optischen Sicherheitssensorelemente, nämlich den Teiltransmissionsreflektor 66, die Kamera oder Kamerabrille 67, zum Beispiel die beschriebene Infrarot-Brille des Beobachters, die unsichtbare Lichtquelle 68 und den Beleuchtungskegel 69. Von Außenstehenden ist das System und seine Funktion nicht erkennbar. Es können für jede Einsatzsituation andere Teiltransmissionsreflektoren zur Verwendung kommen, mit anderen Fenstern des Spektrums, um Aussenstehenden auch die Möglichkeit zu verwehren, ohne Wissen der richtigen Frequenz, ebenfalls sensorische Beobachtungen durchzuführen.

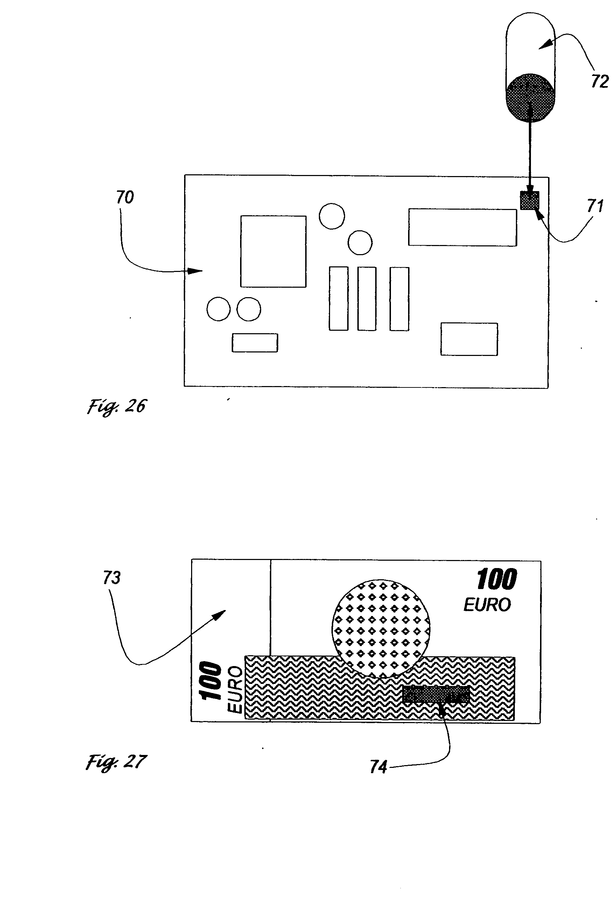

Der Teiltransmissionsreflektor ermöglicht aber noch eine Vielzahl anderer Möglichkeiten der Informationsübertragung. So kann beim automatischen Bestücken von elektronischen Leiterplatten, Fig. 26, auf der Leiterplatte 70 ein kleiner Teiltransmissionsreflektor 71 angebracht sein, der für den optischen Sensor 72 zur Nullpunktbestimmung dient. Dadurch kann die automatische Bestückungsanlage die Position der auf der Leiterplatte zu fixierenden elektronischen Bauelemente bestimmen. Der spätere Empfänger der Leiterplatte kann den Teiltransmissionsreflektor als solchen nicht erkennen, die Hilfsfunktion für den Zusammenbau bleibt ihm verborgen. Einen Teiltransmissionsreflektor als verlorenes Steuerelement auf Produkten zu belassen, bietet sich in vielen Produktionsbereichen an, wie im Automobilbau oder in der Möbelfertigung. Bei vielen Gütern sind dringend Steuerungskodierungen mit reflektierenden Flächen für die Optosensorik sinnvoll, jedoch fürchtet man die Beschädigung empfindlicher Oberflächen. Wenn jedoch der Teiltransmissionsreflektor konstruktiv so verbaut ist, dass er in seiner Funktion vom Verbraucher nicht erkennbar ist, zum Beispiel als Zierleiste, so kann der Teiltransmissionsreflektor nach der Produktfertigung auf dem Produkt verbleiben.

Fig. 27 zeigt einen Geldschein 73, der ein unsichtbares Feld mit einem mikrostrukturiertem Teiltransmissionsreflektor 74 enthält, der weitere Sicherheitsinformationen enthalten kann.

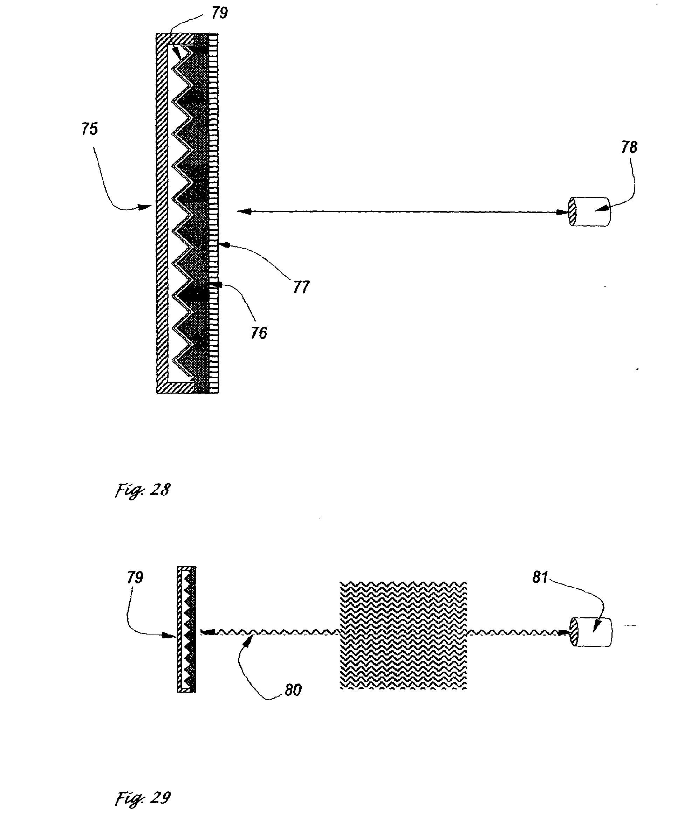

Der Teiltransmissionsreflektor 75 in Fig. 28 kann auch noch zusätzlich auf seiner Lichteintritts-Oberfläche 76 mit einem Polarisationsfilter versehen sein optimiert an die Wellenlänge des gewünschten Lichts, so dass Polarisationsfiltersysteme der Lichtschranken zur Erhöhung der Signalsicherheit verwendet werden können.
Dieser Polarisationsfilter kann nicht nur eine aufgebrachte Polarisationsfolie sein, sondern kann direkt in die Oberfläche des Teiltransmissionsreflektors als lineare Struktur 77 eingeprägt sein.

Ebenso kann der Teiltransmissionsreflektor 75 auf seiner Oberfläche 76 eine Fresnellinse 77 tragen, die das einfallende Licht und das reflektierte Lichtbündel zu einer bestimmten Brennweite formt.

Auch kann der Teiltransmissionsreflektor so gestaltet sein, dass sein zur Herstellung verwendeter Werkstoff das Fenster des Spektrum zum Beispiel nach unten begrenzt, also etwa undurchdringlich für Wellenlängen kleiner 700 nm und eine auf der Lichteintrittseite aufgebrachte Lackierung, Kunststoffplatte 77 oder Folie begrenzt das Fenster des Spektrum nach oben, undurchdringlich für Wellenlängen zum Beispiel größer 900 nm. Durch solche Kombinationen zweier Werkstoffe oder Einfärbungen können sehr enge Fenster des Spektrums für den Teiltransmissionsreflektor geschaffen werden.

Aber auch die Tripelseite 79 kann eine Beschichtung tragen, um ein bestimmtes Spektrum reflektieren zu können. So kann auf die Tripel eine Schicht 79 aus Silizium oder Diamant aufgedampft werden, um zum Beispiel Wärmestrahlung reflektieren zu können. Natürlich wird man dafür den die Beschichtung tragenden Kunststoffkörper mit einem wärmebeständigem Werkstoff fertigen, der der Belastung der Beschichtungsarbeit standhält. Auch Metallbeschichtungen auf der Tripelseite oder teiltransparente Metallbeschichtungen auf der Lichteintrittsseite 76)können die Eigenschaften und das Fenster des Spektrums für den Teiltransmissionsreflektor gestalten.

Fig. 28 demonstriert kurz das Prinzip. Der Teiltransmissionsreflektor 75 trägt auf seiner Lichteintrittsseite 76 die Polarisationsstruktur 77 oder die Fresnelstruktur 77 und/oder auch zugleich die Filterplatte 77 zur weiteren Begrenzung des optischen Fensters. Die erforderlichen Mikrostrukturen oder Nanostrukturen sind direkt in die Formoberfläche des Teiltransmissionsreflektors eingraviert und werden vom optischen Sensor (78) beobachtet.

Zum Beispiel bei der Herstellung im Kunststoffspritzguss kann auch unter Verwendung einer Mehrfarbenmaschine der Teiltransmissionsreflektor in Schichten oder Segmenten mit verschiedenen Werkstoffen oder Einfärbungen gefertigt werden, um sein Spektrum-Fenster zu variieren oder mehrere Fenster zu integrieren und/oder seinen Informationsgehalt zu gestalten.

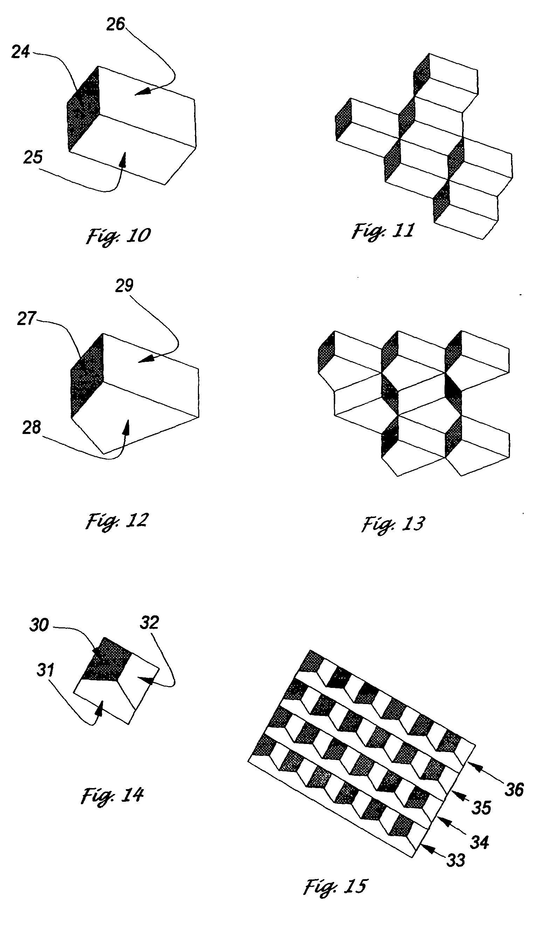

Auch kann der Teiltransmissionsreflektor sehr gut für optische Entfernungsmessungen, wie in Fig. 29, verwendet werden. Dazu kann zum Beispiel die Ausrüstung mit einer Weitwinkeltripelstruktur wie in Fig. 10 bis Fig. 15 symbolisch gezeigt, vorteilhaft sein.

Bei der optischen Entfernungsmessung kommt es häufig zu Fehlmessungen und Störungen, weil der zu beobachtende Gegenstand eine Oberflächenfärbung hat, die bei Bewegung und Veränderung des Winkels zum beobachtenden Entfernungsmesssystem ihre Lichtfrequenz verändert, durch Auftreffen auf die schräg gestellte Oberfläche des Gegenstandes das Sensorlicht polarisiert und die Messung durch Fremdlicht beeinträchtigt wird. Weil aber über die Frequenz als Maßstab gemessen wird, kommt es zu Fehlmessungen. Hier hilft ein für den späteren Empfänger des Gegenstandes "unsichtbarer", also nicht als solcher erkennbarer Teiltransmissionsreflektor 79, der mit einem engen Fenster des Spektrums versehen ist, um eine nahezu exakte Lichtfrequenz 80 zum optischen Sensor 81 zu retroflektieren. Mit der Weitwinkelstruktur gelingt das auch bei Bewegung und Winkelveränderung des Teiltransmissionsreflektors im Bezug zum beobachtenden Sensor.

Der erfindungsgemäße Teiltransmissionsreflektor eröffnet also für die Sensorik zahlreiche völlig neue Möglichkeiten zur sicheren Erkennung oder Informationsübertragung. Ihm stehen durch die verschiedenen Tripelstrukturen zur Retroflexion, Reflexion oder Lichtstrahlumlenkung und auch durch die lineare Reflexstruktur ein Vielzahl von Anwendungsmöglichkeiten offen, die durch seine Verwendung zuverlässiger, sicherer und für den menschlichen Beobachter in seiner Funktionsweise nicht erkennbar machen.

Für die Vertiefung der Anwendungsmöglichkeiten ist bei den nachfolgenden Beschreibungen der Zeichnungen auf weiterführende Literatur verwiesen, deren umfangreicher Inhalt hier nicht wiederholt werden braucht, deren Lehren aber bei der Gestaltung und dem Einsatz von Teiltransmissionsreflektoren ein weites Feld zusätzlicher Anwendungsmöglichkeiten eröffnen.

Ob Flugkörper zur unsichtbaren Kennung ausgerüstet werden oder Fahrzeuge in einer Verdunkelung sich gegenseitig erkennen sollen, das Lichtspektrum bietet eine Vielzahl von möglichen Fenstern für den Teiltransmissionsreflektor. Zum Beispiel aus PMMA gefertigt kann der Teiltransmissionsreflektor auch verwendet werden, um Mikrowellen oder ein Spektrumfenster davon zu reflektieren. Der Teiltransmissionsreflektor eröffnet in seiner Eigenschaft als Lichtabsorber und zugleich Lichtreflektor die Möglichkeit, vielfältige Aufgabenstellungen in der optischen Sicherheitssensorik völlig neuartig zu lösen.

Nachstehend werden die Zeichnungen erläutert.

Es zeigt:

**Fig. 1** den Teiltransmissionsreflektor im Schnitt. Die Tripelplatte 1 mit der Lichteintrittseite 2 und der kubischen Tripelstruktur 3, die aufgrund der Grenzschicht zu Luft 4 total reflektiert. Zum Schutz der Tripelstruktur ist ein Rückkasten 5 mittels Ultraschall aufgeschweißt, der an der Schweißnaht 6 mit der Tripelplatte 1 luft- und wasserdicht verbunden ist.

**Fig. 2** den Teiltransmissionsreflektor von vorne gesehen in der Durchsicht mit der Tripelplatte 1 und der Schweißnaht 6.

**Fig. 3** den beispielhaften Teiltransmissionsreflektor 7 von vorne gesehen, der durch die schwarze, teiltransparente Einfärbung der Tripelplatte nicht mehr als Reflektor, sondern nur noch als schwarze Platte erkennbar ist. Durch die schwarze Einfärbung, das heißt, durch die Verwendung des besonderen Werkstoffes, ist die Tripelplatte nur für Lichtwellenlängen größer 700 nm transparent, wie in Fig. 19 erläutert, dagegen für sichtbares Licht nicht transparent.

**Fig. 4 bis Fig. 15** zeigen verschiedene Tripelsysteme, die für den erfindungsgemäßen Teiltransmissionsreflektor verwendbar sind. Es darf als bekannt vorausgesetzt werden, dass für eine Retroflexion die Tripelteilflächen eines Tripels zueinander in nahezu 90° stehen, abhängig vom verwendeten Werkstoff und der gewünschten Lichtverteilung, dass die Achse des Tripels auch vom Lot abweichend sein darf und die Tripel zueinander als Array gesetzt zu unterschiedlichen Figuren zusammengefügt werden können, um besondere Reflexionseffekte zu erzielen. Die Darstellung einiger verschiedener Tripeltypen soll nur aufzeigen, dass der erfindungsgemäße Teiltransmissionsreflektor mit allen bekannten Tripelsystemen und dazu bekannten Sonderanwendungen arbeiten kann, allerdings beschränkt nur auf den Lichtwellenbereich, für den er transparent ist. Die einzelnen Tripelteilflächen eines Tripels werden nachfolgend als "Spiegel" bezeichnet.

**Fig. 4** zeigt einen pyramidalen Tripel mit den Tripelteilflächen, die nachfolgend als "Spiegel" kurz bezeichnet werden, den Spiegeln 8, 9, 10.

**Fig. 5** zeigt ein Array aus pyramidalen Tripeln der Fig. 4. Für die Verwendung als Laserreflektor, gefertigt im Kunstoffspritzguss beschreibt IMOS Gubela GmbH in der DE-GM 297 07 066.5.

**Fig. 6** zeigt einen kubischen Tripel, auch als Fullcube-Tripel oder Perkin-Elmer-Pyramide bezeichnet, mit den Spiegeln 11, 12 13. Wegen seiner hohen Reflexionsleistung ist der Fullcube-Tripel auch für den erfindungsgemäßen Teiltransmissionsreflektor oft zu bevorzugen besonders in der Ausbildung als Mikrotripel. Die Herstellung lehrt Stimson in der GB-PS 269 760. Den Formenbau für die Herstellung als Mikrotripel beschreibt Gubela in der DE 44 10 884. Die Verwendung mit Laserlicht lehrt Gubela in der DE 197 27 527.

**Fig. 7** zeigt ein Array zusammengefügt aus Fullcube-Tripeln. Vielfältige Gestaltungen des Arrays mit Fullcube-Tripel zeigt Gubela in der DE-GM G92 16 807.8.

**Fig. 8** zeigt ein "Sternchenmuster"-Tripelsystem, gebildet aus drei Tripeln, mit den Spiegeln 14, 15, 16, den Spiegeln 17, 18, 19 und den Spiegeln 20, 21, 22.

**Fig. 9** zeigt ein Array aus den drei Tripeln der Fig. 8. Als Bauform sind rhombische Stifte 23 verwendet, die erst zusammengefügt zum Array die drei Tripel darstellen können.

**Fig. 10** zeigt einen gestreckten kubischen Tripel mit den Spiegeln 24, 25, 26, der je nach Winkelstellung der Tripelflächen zueinander als einseitig ausgerichteter Weitwinkelreflektor oder als Umlenkreflektor verwendet wird. Auch diese Funktionen sind mit dem Teiltransmissionsreflektor erfüllbar. Zur Funktion und Bauweise des Weitwinkelreflektors lehrt Gubela in der DE 44 29 683 C1 und Gubela in der DE-PA 102 16 579.3. Die Funktion dieser Tripelstruktur als Umlenkreflektor lehrt Gubela in der DE-PA 101 19671.7.

**Fig. 11** zeigt ein Array aus Tripeln der Fig. 10.

**Fig. 12** zeigt einen Sonderformtripel mit den Spiegeln 27, 28, 29, der unter Anwendung der Winkelvorschriften in der Literatur, wie bereits unter Fig. 10 genannt, als Weitwinkel oder auch als Umlenkstruktur für den Teiltransmissionsreflektor verwendbar ist.

**Fig. 13** zeigt ein Array aus Tripeln der Fig. 12.

**Fig. 14** zeigt einen "Cut-Twice"-Tripel mit den Spiegeln 30, 31, 32, der sich ableitet aus der Lehre Gubela DE 44 10 994 2, dort Fig. 13 und 14 und Gubela in der DE-PA 102 16 579.3.

**Fig. 15** zeigt ein Array aus Tripeln der Fig. 14, wobei die Reihen 33, 34, 35, 36 der Tripel auch anders angeordnet werden können, zum Beispiel, indem die Reihen 34 und 36 um 180° gedreht werden.

**Fig. 16** zeigt einen Linearreflektor 37 für Laserlicht, auch als "Gubela Reflektorrad" bezeichnet, der auf den Sendestrahl 38 des optischen Sensors 39 mit Reflexsignalen 40 antwortet, die den Speichen eines Rades ähneln, wie Gubela jun. in der WO 01/13144 A1 lehrt.

**Fig. 17** zeigt den Teiltransmissionsreflektor 41, der den Sendestrahl 42 des optischen Sensors 43 retroflektiert. Die Lichtaustrittsfläche und Lichteintrittsfläche 44 des optischen Sensors ist mit einer Kunststoffkappe geschützt, die wie der Teiltransmissionsreflektor nur Wellenlängen größer 700 nm hindurchläßt.

**Fig. 18** zeigt drei Retroflektoren, die so dicht untereinander angeordnet sind, dass die Lichtkegel der optischen Sensoren sich gegenseitig stören könnten. Deshalb werden zwei optische Sensorsysteme abwechselnd verwendet, das mittlere arbeitet mit 680 nm, die beiden benachbarten Sensorsysteme mit 880 nm.

Tatsächlich geschützt werden die Systeme erst durch die Verwendung von Teiltransmissionsreflektoren. Der erste Teiltransmissionsreflektor 45 retroflektiert nur das 880 nm Signal 46 des optischen Sensors 47. Der zweite Reflektor ist ein herkömmlicher Sensorreflektor, der alle auf ihn eintreffenden Lichtwellen reflektiert. Er bedient mit seinen Reflexionen aber nur den optischen Sensor 49, der mit einem Lichtkegel 50 von 680 nm arbeitet und nur diese Wellenlänge empfangen kann. Die Reflexionen im Wellenlängenbereich von 880 nm, die der Reflektor 48 ebenfalls reflektiert, beeinträchtigen die Messung des optischen Sensors 49 nicht. Aber Reflektor 48 reflektiert auch Licht von 880 nm und kann zu Fehlmessungen bei den Sensoren 47 und 53 führen.

Der Teiltransmissionsreflektor 51 retroflektiert nur den Lichtkegel 52 zum optischen Sensor 53. Das Licht des benachbarten Lichtkegels 50 trifft ihn zwar auch, jedoch ist der Teiltransmissionsreflektor für diese Wellenlänge undurchsichtig, so dass dieses Licht nicht reflektiert wird.

**Fig. 19** zeigt die spektrale Transmission des schwarzen Beispielwerkstoffes. Der Werkstoff zeigt in dem betrachteten Spektrum seine größte prozentuale Transmission des Lichts bei 880 nm und ist deshalb sehr gut für den erfindungsgemäßen Teiltransmissionsreflektor geeignet.

**Fig. 20** zeigt die spektrale Augenempfindlichkeit. Vergleicht man Fig. 19 mit Fig 20 wird deutlich, dass der Teiltransmissionsreflektor für das unbewaffnete Auge nur als schwarze Platte erscheint und auch für die am häufigsten verwendeten optischen Sensoren mit Spektren kleiner 700 nm nicht ansprechbar ist.

**Fig. 21** zeigt das Prinzip des erfindungsgemäßen optischen Sicherheitssensorsystems mit dem Teiltransmissionsreflektor 54. Auf den Teiltransmissionsreflektor 54 trifft der beispielhafte Sensorstrahl 55 mit einer Wellenlänge von 880 nm und wird zum optischen Sensor 56 hin retroflektiert. Hingegen wird der zweite Sensorstrahl 57 mit einer Wellenlänge von 680 nm, der vom optischen Sensor 58 emittiert wurde, nicht retroflektiert. Betrachtet man die beiden optischen Sensoren 56 und 58 als gemeinsame Baueinheit 59, mit nahezu auf gleichen Achsen verlaufenden Sensorstrahlen, so ist ein besonderes Sicherheitssensorsystem geschaffen, das gegen Störungen durch Fremdstrahlung unempfindlich ist. Die Baueinheit 59 kann auch so beschaffen sein, dass sie für verschiedene Wellenlängen und/oder verschiedene Teiltransmissionsreflektoren passend umschaltbar ist.

Folgende Schaltpositionen sind möglich:
a) Sensor 56 erhält Signal, Sensor 58 erhält kein Signal, das bedeutet, der Weg bis zum Teiltransmissionsreflektor ist frei.
b) Sensor 56 erhält kein Signal, Sensor 58 erhält kein Signal, das bedeutet, der Weg bis zum Teiltransmissionsreflektor ist durch einen nicht transparenten Gegenstand unterbrochen.
c) Sensor 56 erhält Signal, Sensor 58 erhält auch Signal, das bedeutet, der Weg bis zum Teiltransmissionsreflektor ist unterbrochen durch einen fremden Reflektor, zum Beispiel die Reflexfolie auf der Sicherheitskleidung eines Menschen.
d) Sensor 56 erhält kein Signal, Sensor 58 erhält aber ein Signal, eine Störstrahlung durch einen anderen, herkömmlichen Sensor, der im sichtbaren Spektrum arbeitet, ist aufgetreten.

**Fig. 22** zeigt den Teiltransmissionsreflektor 60 als Informationsträger. Die Tripelfläche 61 ist verformt oder in der Weise verändert worden, zum Beispiel durch Lackierung, dass nur ein Teilbereich des Tripelarrays reflektierend wirkt. Der Sensor 62, zum Beispiel eine Kamera mit Beleuchtung kann die retroflektierte Information auslesen. Über die Kodierung von Tripelflächen durch Prägen berichtet Gubela in der DE 21 18 822.

**Fig. 23** zeigt einen Information tragenden Teiltransmissionsreflektor von vorn gesehen mit einer Infrarot-Kamerabrille und Infrarotbeleuchtung gesehen. Die verborgene Information 61 wird vor dem Hintergrund 63 sichtbar. Die Information "Secret" kann eine Nichtreflektion vor reflektierendem Hintergrund sein oder eine reflektierende Information vor einem nicht reflektierenden Hintergrund.

**Fig. 24** zeigt einen Menschen 64 hinter Büschen verborgen, der auf dem Rücken einen Teiltransmissionsreflektor als Folie trägt, dessen enthaltene Information bei Infrarotlichtbeleuchtung und Beobachtung mit einer Infrarot-Kamerabrille sichtbar wird. Für das unbewaffnete Auge erscheint das gesamte Bild nachtdunkel.

**Fig. 25** zeigt, wie ein Teiltransmissionsreflektor mit dem Lichtkegel 69 einer Lichtquelle 68 mit geeignetem Spektrum beleuchtet wird und das Licht und seine enthaltene Information zum optischen Sensor 67 reflektiert. Hier könnte der Teiltransmissionsreflektor auch eine Umlenkstruktur wie in Fig. 10 bis Fig. 13 enthalten, die das einfallende Licht nicht zur Lichtquelle reflektiert, sondern zu einem anderen Punkt umlenkt.

**Fig. 26** zeigt eine Leiterplatte für eine Elektroplatine 70 mit einem unsichtbarem Teiltransmissionsreflektor 71, der zur Nullpunktbestimmung von einem Sensor 72 beobachtet wird, damit ein Bestückungsautomat die Leiterplatte positionsgenau bestücken kann mit den Elektronikelementen. Das ist ein Beispiel für die Ausrüstung von Produkt-Gegenständen in der Fördertechnik und der Produktion mit unsichtbaren Teiltransmissionsreflektoren, die zur Fertigungssteuerung dienen und nach Auslieferung auf dem Produkt verbleiben können, weil der Teiltransmissionsreflektor vom Verbraucher nicht als solcher zu erkennen ist.

**Fig. 27** zeigt, wie ein Geldschein 73 einen Teiltransmissionsreflektor 74 mit mikrostrukturierten Tripeln und einer geheimen Kontrollinformation trägt, die nur unter der vorher bestimmten Wellenlänge des Lichts und entsprechender Sensorik zu lesen ist.

**Fig. 28:** ein Teiltransmissionsreflektor 75 trägt auf seiner Lichteintrittsfläche 76 eine Mikrostruktur 77 als Fresnellinse oder als lineare Polarisationsfilterstruktur oder eine zweite Kunststoffschicht, Folie, Lackschicht oder teiltransparente Metallschicht, die das Transmissionsfenster des Teiltransmissionsreflektors zusätzlich verkleinert. Der Sensor 78 beobachtet den Teiltransmissionsreflektor. Zusätzlich kann der Teiltransmissionsreflektor auf seiner Tripelseite 79 mit einer vollkommenen oder teilweisen Beschichtung versehen sein aus Lack, Kunststoff, Metall oder Silizium oder Diamantschicht, um das Reflexionsspektrum des Teiltransmissionsreflektors oder die ihn enthaltene Information zu bestimmen.

**Fig. 29:** ein Teiltransmissionsreflektor 79 wird zur optoelektronischen Entfernungsmessung verwendet. Der Sensor 81 sendet ein Licht 80 aus und misst die Laufzeit des Lichts bis zur Rückkehr, wobei die Wellenlänge des Lichts durch den Teiltransmissionsreflektor konstant gehalten retroflektiert wird.

Zusammenfassend ist folgendes festzuhalten: Die Erfindung betrifft einen Teiltransmissionsreflektor und ein optisches Sicherheitssensorsystem.

Der Teiltransmissionsreflektor ist durch den verwendeten Werkstoff, dessen Lichttransmission auf einen bestimmten Lichtwellenbereich beschränkt ist, so verändert in den Reflexionseigenschaften, dass nur noch für das Auge unsichtbares Licht eines bestimmten Wellenlängenbereiches reflektiert wird.

Der Teiltransmissionsreflektor wird für ein optisches Sicherheitssensorsystem verwendet, das dadurch fähig ist, eigene Reflexionen des Sensorstrahles aus dem Teiltransmissionsreflektor kommend von den Fremdreflexionen zu unterscheiden, die von anderen Reflexflächen als dem zu beobachtenden Teiltransmissionsreflektor eintreffen.

## Patentansprüche

1. Teiltransmissionsreflektor mit einer reflektierenden Struktur(3), mit einem an der Lichteintrittsseite (2) angeordneten, die reflektierende Struktur (3) bedeckenden teiltransparenten Material, das wellenlängenselektiv Licht in einem unsichtbaren Wellenlängenbereich transmittiert, **dadurch gekennzeichnet, dass** die reflektierende Struktur (3) die Kontur eines eine Information wiedergebenden Symbols (61) aufweist.

2. Teiltransmissionsreflektor nach Anspruch 1, **dadurch gekennzeichnet, dass** die reflektierende Struktur (3) die der Lichteintrittsseite (2) abgewandte Oberfläche einer Platte (1) aus dem teiltransparenten Material ist.

3. Teiltransmissionsreflektor nach Anspruch 2, **dadurch gekennzeichnet, dass** die reflektierende Struktur (3) für in die Platte (1) eintretendes Licht totalreflektierend wirkt.

4. Teiltransmissionsreflektor nach Anspruch 2 oder 3, **dadurch gekennzeichnet, dass** die der Lichteintrittsseite (2) abgewandte Oberfläche der Platte (1) durch eine Rückwand (5) geschützt ist.

5. Teiltransmissionsreflektor nach Anspruch 2 oder 3, **dadurch gekennzeichnet, dass** die der Lichteintrittsseite (2) abgewandte Seite der Platte (1) mit Metall, insbesondere Germanium, Silber, Aluminium oder Kupfer bedampft oder durch Sputtern beschichtet ist.

6. Teiltransmissionsreflektor nach einem der vorangehenden Ansprüche, **dadurch gekennzeichnet, dass** die reflektierende Struktur (3) Linearreflektoren aufweist.

7. Teiltransmissionsreflektor nach einem der Ansprüche 1 bis 5, **dadurch gekennzeichnet, dass** die reflektierende Struktur (3) eine Vielzahl von reflektierenden Tripeln aufweist.

8. Teiltransmissionsreflektor nach Anspruch 7, **dadurch gekennzeichnet, dass** die Tripel Fullcube-Tripel sind.

9. Teiltransmissionsreflektor nach Anspruch 7, **dadurch gekennzeichnet, dass** die Tripel pyramidenförmig sind.

10. Teiltransmissionsreflektor nach Anspruch 7, **dadurch gekennzeichnet, dass** die Tripel jeweils unterschiedlich große Tripelteilflächen (24, 25, 26; 27, 28, 29; 30, 31, 32) aufweisen.

11. Teiltransmissionsreflektor nach einem der vorangehenden Ansprüche, **dadurch gekennzeichnet, dass** die Kontur (61) durch eine nicht reflektierende Abdeckung von Bereichen der reflektierenden Struktur (3) gebildet ist.

12. Teiltransmissionsreflektor nach einem der Ansprüche 1 bis 10, **dadurch gekennzeichnet, dass** die Kontur (61) durch eine Deformation von Bereichen der reflektierenden Struktur (3) gebildet ist.

13. Teiltransmissionsreflektor nach einem der vorangehenden Ansprüche, **dadurch gekennzeichnet, dass** zumindest ein Teil der Lichteintrittsfläche (2) als Fresnellinse ausgebildet ist.

14. Teiltransmissionsreflektor nach einem der vorangehenden Ansprüche, **dadurch gekennzeichnet, dass** zumindest ein Teil der Lichteintrittsfläche (2) als Polarisationsfilter ausgebildet ist.

15. Teiltransmissionsreflektor nach einem der vorangehenden Ansprüche, **dadurch gekennzeichnet, dass** die reflektierende Struktur (3) aus Glas, Mineral oder Kunststoff ausgebildet ist als Prägeteil, Gießteil, Spritzgussteil oder als Folie.

16. Teiltransmissionsreflektor nach einem der vorangehenden Ansprüche, **dadurch gekennzeichnet, dass** das wellenlängenselektive Material ein schwarzer, violetter oder dunkelbrauner Kunststoff ist, insbesondere PMMA.

17. Teiltransmissionsreflektor nach einem der vorangehenden Ansprüche, **gekennzeichnet durch** einen Transmissionsbereich für Licht der Wellenlänge zwischen 780 nm und 1100 nm.

18. Teiltransmissionsreflektor nach einem der Ansprüche 7 bis 17, **dadurch gekennzeichnet, dass** zumindest Teile der Tripelflächen mit Silizium oder Diamant beschichtet sind.

19. Teiltransmissionsreflektor nach einem der vorangehenden Ansprüche, **gekennzeichnet durch** mindestens eine weitere teiltransparente Deckschicht aus Lack, Folie, Kunststoff, Glas, Mineral oder Metall.

20. Sensorsystem mit einem Teiltransmissionsreflektor (41, 54, 60) nach einem der vorangehenden Ansprüche, mit einer Lichtquelle (43, 56, 62) zur Aussendung von durch den Teiltransmissionsreflektor (41, 54, 60) reflektierbarem Licht sowie einem Sensor (43, 56, 62) für die Detektion von vom Teiltransmissionsreflektor (41, 54, 60) reflektiertem Licht.

21. Sensorsystem nach Anspruch 20, **gekennzeichnet durch** eine zweite Lichtquelle (58) zur Aussendung von **durch** den Teiltransmissionsreflektor (54) nicht reflektierbarem Licht und einen zweiten Sensor (58) für die Detektion von von der zweiten Lichtquelle (58) ausgesandtem Licht.

22. Verwendung eines Teiltransmissionsreflektors nach einem der Ansprüche 1 bis 19 für die Kennzeichnung von Gegenständen, insbesondere von Kleidungsstücken, Werkstücken oder Bauteilen.
